# EUROPEAN PATENT APPLICATION

(11) **EP 4 495 786 A1**
(43) Date of publication of application: **22.01.2025**
(21) Application number: 23770139.6
(22) Date of filing: 31.01.2023
(51) Int. Cl.: G06F 12/06, G06F 12/00

(54) **MEMORY CARD AND HOST DEVICE**

(30) Priority: 16.03.2022 JP 2022040888
(71) Applicant: Panasonic Intellectual Property Management Co., Ltd., Osaka-shi, Osaka 540-6207 (JP)
(72) Inventor: INAGAKI Yoshihisa, Osaka 571-0057 (JP); ONO Tadashi, Osaka 571-0057 (JP); KATO Isao, Osaka 571-0057 (JP)
(74) Representative: Eisenführ Speiser
(86) International application number: PCT/JP2023/003075
(87) International publication number: WO 2023/176177

(57) **Abstract**

A memory card is configured to be inserted into and removed from a connector provided in a host device, and includes: a memory that stores heat dissipator information on a heat dissipator of the memory card; and a processor that returns a response including the heat dissipator information in response to a command for inquiring heat dissipation performance transmitted from the host device.

## Description

### TECHNICAL FIELD

The present disclosure relates to a memory card and a host device with improved heat dissipation performance.

### BACKGROUND ART

PTL 1 discloses a device for managing heat dissipation from a plug-in functional module for a portable computer and user operable release means for releasing a docked module. The device is provided with a device with a thermal sink structure that is deformable to come into contact with a module docked to extract useless heat. This configuration enables useless heat to be absorbed from the functional module.

### Citation List

### Patent Literature

PTL 1: Unexamined Japanese Patent Publication No. 10-502755

### SUMMARY OF THE INVENTION

The present disclosure provides a memory card capable of causing a host device to perform control in consideration of heat dissipation performance by performing appropriate exchange between the host device into which the memory card is mounted and the memory card.

An aspect of the present disclosure provides a memory card configured to be inserted into and removed from a connector provided in a host device, the memory card including: a memory that stores heat dissipator information on a heat dissipator of the memory card; and a processor that returns a response including the heat dissipator information in response to a command for inquiring heat dissipation performance transmitted from the host device.

The memory card of the present disclosure is capable of implementing control in consideration of heat dissipation performance in exchange with a host device.

### BRIEF DESCRIPTION OF THE DRAWINGS

Fig. 1 is a schematic diagram illustrating a memory card and a connector mounted on a substrate of a host device according to a first exemplary embodiment.
Fig. 2 is a schematic diagram illustrating a memory card and a connector mounted on a substrate of a host device according to a second exemplary embodiment.
Fig. 3 is a schematic diagram illustrating a memory card and a connector mounted on a substrate of a host device according to a third exemplary embodiment.
Fig. 4 is a sequence diagram of a host device and a memory card according to the first exemplary embodiment.
Fig. 5 is a sequence diagram of a host device and a memory card according to the second exemplary embodiment.
Fig. 6 is a sequence diagram of a host device and a memory card according to the third exemplary embodiment.
Fig. 7 is a schematic diagram of the memory card according to the first exemplary embodiment.
Fig. 8 is a schematic diagram of the connector according to the first exemplary embodiment.
Fig. 9 is a table of presence and absence information and position information on a heat dissipator according to the first exemplary embodiment.
Fig. 10 is a table of material information on the heat dissipator according to the first exemplary embodiment.
Fig. 11 is a plan view and a sectional view of the connector and the memory card according to the first exemplary embodiment.

### DESCRIPTION OF EMBODIMENT

Hereinafter, exemplary embodiments will be described in detail with reference to the drawings as appropriate. Descriptions more in detail than necessary may not be described. For example, detailed descriptions of already well-known matters and duplicated description of substantially identical configurations may not be described. This is to avoid the description below from being unnecessarily redundant and thus to help those skilled in the art to easily understand the description.

The accompanying drawings and the description below are provided for those skilled in the art to fully understand the present disclosure, and are not intended to limit the subject matter described in the scope of claims.

### (First exemplary embodiment)

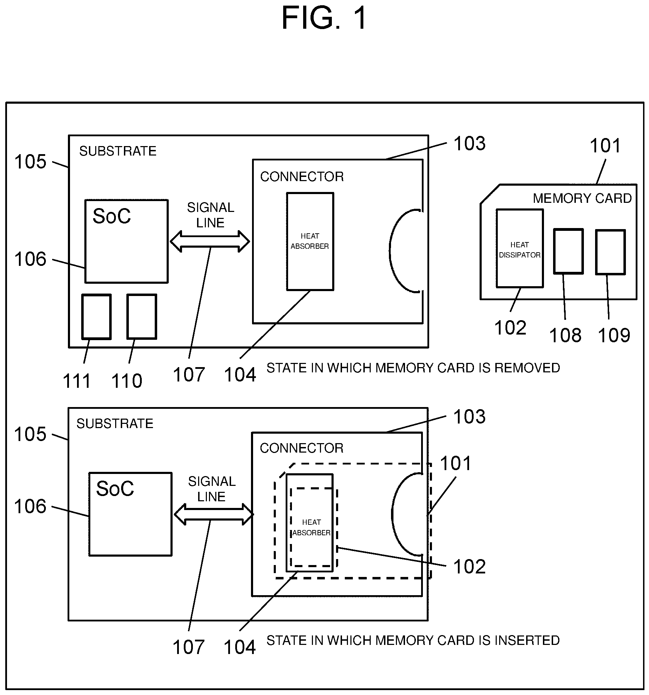

Hereinafter, a first exemplary embodiment will be described with reference to Figs. 1, 4, and 7 to 11.

### [1-1. Configuration]

Fig. 1 is a schematic diagram illustrating a memory card and a connector mounted on a substrate of a host device according to the first exemplary embodiment.

With reference to an upper part of Fig. 1 in which memory card 101 is removed, a configuration will be described.

Substrate 105 of the host device is equipped with connector 103 into which memory card 101 can be inserted and removed. Connector 103 includes heat absorber 104. Heat absorber 104 is made of a material having high thermal conductivity to efficiently conduct heat from memory card 101 to the connector. Heat absorber 104 is configured to be in contact with a memory card inserted. Substrate 105 is also equipped with a controller capable of transmitting and receiving an electric signal. System on chip (SoC) 106 is an example of the controller. SoC 106 is connected to connector 103 by signal line 107, and can transmit an electric signal from SoC 106 to connector 103. Information (heat absorber information) such as a position and a shape of heat absorber 104 provided in connector 103 is determined when the host device is manufactured, and thus storage unit 110 such as a nonvolatile memory mounted on the host device stores the information when the host device is manufactured and holds the information that is available by SoC 106. The host device further includes air cooling fan 111. Storage unit 110 and air cooling fan 111 may not be illustrated except in the upper part of Fig. 1.

Although the host device usually requires a dynamic random access memory (DRAM), other peripheral components, and the like, they are not illustrated because they are not directly related to the contents of the present disclosure.

Memory card 101 includes heat dissipator 102 for releasing heat in memory card 101. Heat dissipator 102 is made of a material having a higher thermal conductivity than a housing of memory card 101. Heat dissipator 102 is at a position in contact with heat absorber 104 when inserted into connector 103. Memory card 101 further includes memory 108 and processor 109.

Fig. 1 includes a lower part illustrating a state in which memory card 101 is inserted into connector 103.

Memory card 101 inserted into connector 103 mounted on substrate 105 of the host device receives a command using an electric signal from SoC 106 via connector 103. Memory card 101 is capable of analyzing the received electrical signal and transmitting a response using an appropriate electrical signal to SoC 106.

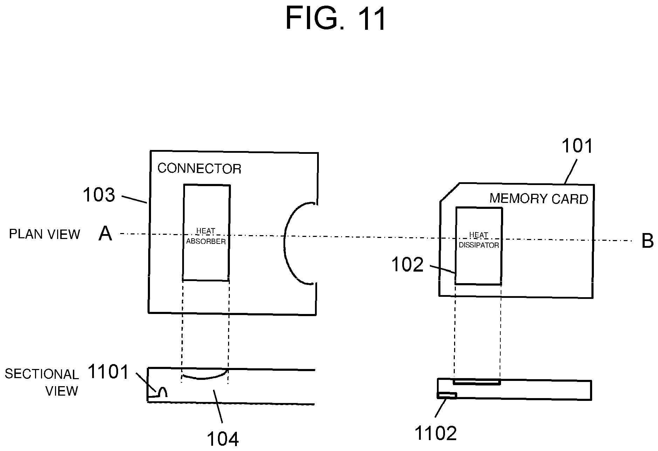

With reference to Fig. 11, a shape of connector 103 will be described. Fig. 11 includes a plan view and a sectional view of connector 103 and memory card 101. The sectional view is taken along plane A-B in the plan view. Heat absorber 104 has a section in a semicylindrical shape in an elastic state. That is, heat absorber 104 is a convex shape. This is to ensure bonding with heat dissipator 102 for heat dissipation.

The connector includes signal terminal 1101 disposed to be in contact with signal terminal 1102 of memory card 101 inserted. A command and a response are exchanged via this contact.

Although only one signal terminal is illustrated in the sectional view of Fig. 11, a plurality of terminals exists. Although connector 103 usually includes separately necessary components and mechanisms, they are not illustrated because they are not directly related to the contents of the present disclosure.

### [1-2-1. Operation]

Operation of memory card 101 configured as described above will be described as follows.

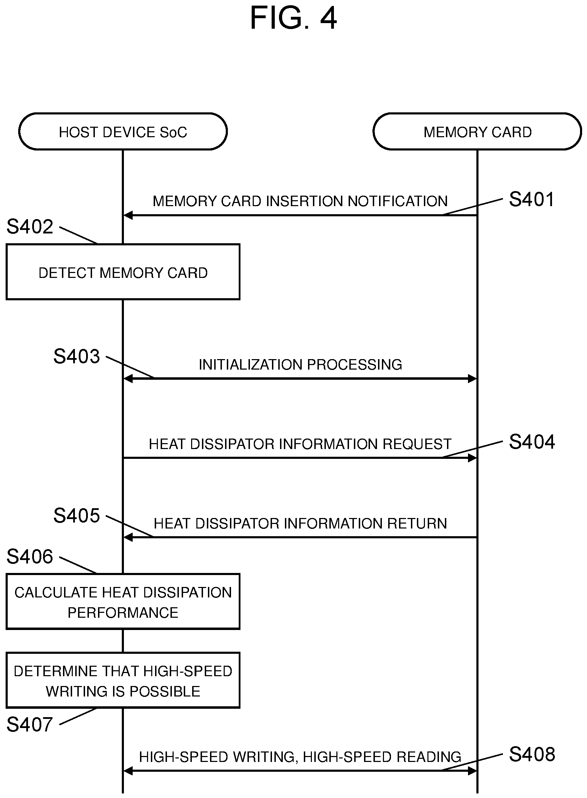

Fig. 4 is a sequence diagram for illustrating operation of the host device and memory card 101 inserted into connector 103 of substrate 105 of the host device.

Memory card 101 is inserted into connector 103 of substrate 105 of the host device. Connector 103 is connected to SoC 106 mounted on the host device by signal line 107 to notify SoC 106 of information that memory card 101 has been inserted (S401).

SoC 106 detects insertion of memory card 101 (S402). SoC 106 transmits a command to memory card 101 via signal line 107. Memory card 101 analyzes the command and returns an appropriate response. The command and response described above are repeated multiple times to execute initialization processing (S403). After the initialization processing, memory card 101 is brought into a state where writing, reading, erasing, and the like of data can be executed.

SoC 106 issues a command for requesting heat dissipator information to memory card 101 (S404). Processor 109 in memory card 101 returns a response including the heat dissipator information stored in memory 108 (S405). SoC 106 calculates heat dissipation performance from the heat dissipator information included in the response and the heat absorber information already provided and held in connector 103. For example, when heat dissipator 102 is identical in position to heat absorber 104 and heat dissipator 102 and heat absorber 104 are each made of a material with a high thermal conductivity, the heat dissipation performance is calculated to be high (S406).

When determining that the heat dissipation performance is at a high level, SoC 106 determines that high-speed writing and high-speed reading with large heat generation can be executed (S407). After that, SoC 106 executes the high-speed writing and the high-speed reading on memory card 101 as necessary (S408).

### [1-2-2. Calculation of information to be transmitted and received and heat dissipation performance]

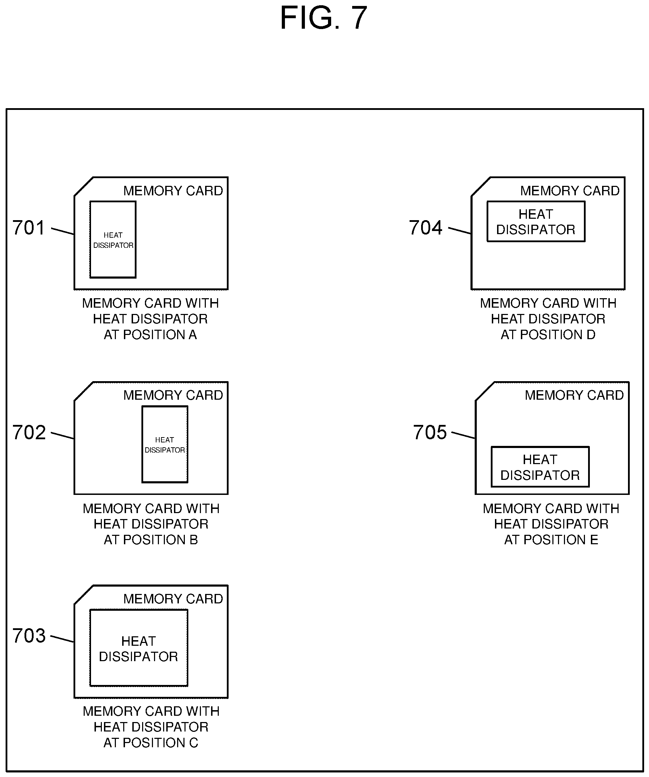

With reference to Figs. 7 to 10, heat dissipator information exchanged between SoC 106 mounted on the host substrate and memory card 101 will be described.

Fig. 7 schematically illustrates a position of a heat dissipator provided in the memory card. Memory card 701 with a heat dissipator at position A has a surface on which the heat dissipator is located forward in an insertion direction into the connector. Memory card 702 with a heat dissipator at position B has a surface on which the heat dissipator is located backward in the insertion direction into the connector. Memory card 703 with a heat dissipator at position C has a surface throughout which the heat dissipator is located. Memory card 704 with a heat dissipator at position D has a surface on which the heat dissipator is located right in the insertion direction into the connector. Memory card 705 with a heat dissipator at position E has a surface on which the heat dissipator is located left in the insertion direction into the connector.

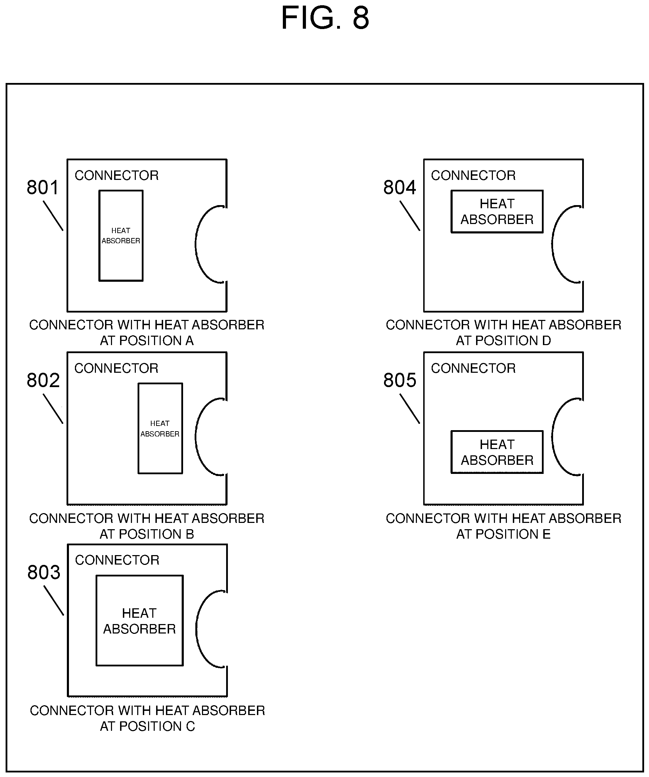

Fig. 8 schematically illustrates a position of a heat absorber provided in the connector. Connector 801 with a heat absorber at position A has a surface on which the heat absorber is located forward in an input direction of the memory card. Connector 802 with a heat absorber at position B has a surface on which the heat absorber is located backward in the input direction of the memory card. Connector 803 with a heat absorber at position C has a surface on which the heat absorber is located to cover an entire surface of the memory card. Connector 804 with a heat absorber at position D has a surface on which the heat absorber is located right in the input direction of the memory card. Connector 805 with a heat absorber at position E has a surface on which the heat absorber is located left in the input direction of the memory card.

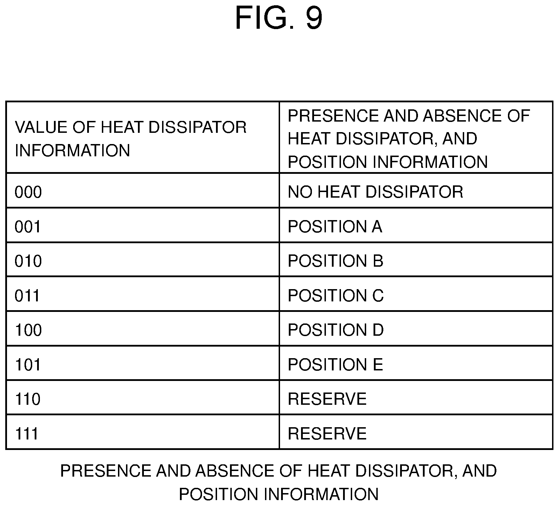

Fig. 9 shows an example of expression of the presence and absence information on the heat dissipator (information indicating whether the memory card has the heat dissipator) and the position information on the heat dissipator, which are included in a response returned from the memory card. The presence and absence information and the position information on the heat dissipator indicate whether the heat dissipator exists in the memory card and the position information on the heat dissipator provided in the memory card. A value of "000" indicates that no heat dissipator is provided, and a value of "001" indicates memory card 701 in which the heat dissipator is provided at position A. Then, a value of "010" indicates memory card 702 in which the heat dissipator is provided at position B. Similarly, values of "001", "100", "101" indicate memory card 703 with the heat dissipator at position C, memory card 704 with the heat dissipator at position D, and memory card 705 with the heat dissipator at position E, respectively.

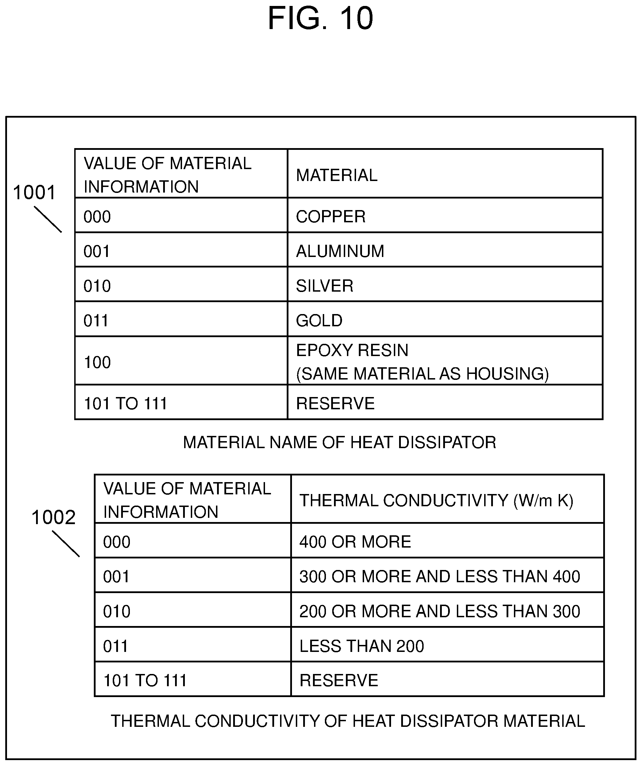

Fig. 10 illustrates an example of expression of material information included in the response returned from the memory card. A material name of the heat dissipator represents a material name of the heat dissipator provided in the memory card. A value of "000" indicates copper, and a value of "001" indicates aluminum. Similarly, values of "010", "011","100" indicate silver, gold, and epoxy resin, respectively.

Thermal conductivity of the heat dissipator represents thermal conductivity of the heat dissipator provided in the memory card. A value of "000" indicates a thermal conductivity of 400 W/mK or more, and a value of "001" indicates a thermal conductivity of 300 W/mK or more and less than 400 W/mK. Similarly, values of "010" and "011" indicates a thermal conductivity of 200 W/mK or more and less than 300 W/mK, and a thermal conductivity of less than 200 W/mK, respectively.

An example will be described in which the material name illustrated in Fig. 10 is used as material information on the heat dissipator. In response to a command requesting the heat dissipator information from SoC 106, memory card 101 returns a response including whether the heat dissipator exists and position information indicated as "001", and the material name of the heat dissipator indicated as "000". This information allows SoC 106 to find memory card 701 that is provided with the heat dissipator at position A and made of copper. SoC 106 has already known the information on the connector, and thus finds that connector 801 with the heat absorber at position A allows the heat absorber to be identical in position to the heat dissipator. SoC 106 further finds that memory card 701 has a high thermal conductivity because it is made of copper. These pieces of information allow SoC 106 to determine that memory card 101 inserted into the connector has heat dissipation performance at a high level.

### [1-3. Effects, etc.]

As described above, SoC 106 of the host device in the first exemplary embodiment issues a command for requesting the heat dissipator information to memory card 101 inserted. Memory card 101 returns a response including the heat dissipator information to SoC 106. As a result, SoC 106 of the host device can determine whether memory card 101 inserted has high heat dissipation performance. Thus, a writing speed and a reading speed of data suitable for the heat dissipation performance can be easily determined.

### (Second exemplary embodiment)

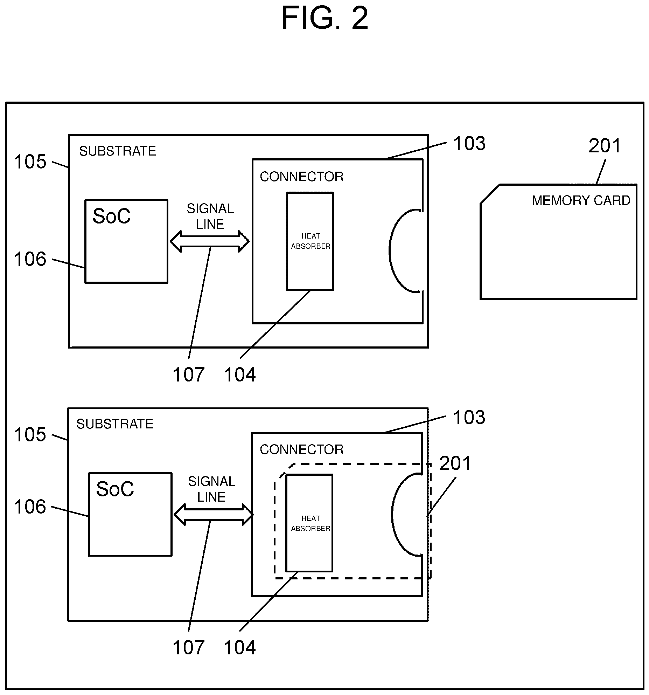

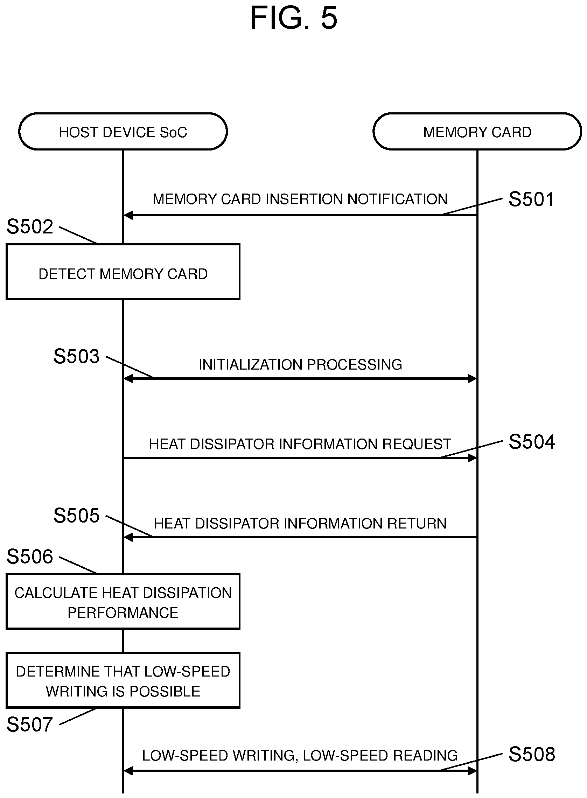

Hereinafter, a second exemplary embodiment will be described with reference to Figs. 2 and 5.

### [2-1. Configuration]

Fig. 2 is a schematic diagram illustrating a memory card and a connector mounted on a substrate of a host device according to the second exemplary embodiment.

With reference to an upper part of Fig. 2 in which the memory card is removed, a configuration will be described.

Substrate 105 of the host device is equipped with connector 103 into which memory card 201 can be inserted and removed. Connector 103 includes heat absorber 104. Heat absorber 104 is made of a material having high thermal conductivity to efficiently conduct heat from memory card 201 to the connector. Heat absorber 104 is configured to be in contact with a memory card inserted. Substrate 105 is also equipped with a controller capable of transmitting and receiving an electric signal. SoC 106 is an example of the controller. SoC 106 is connected to connector 103 by signal line 107, and can transmit an electric signal from SoC 106 to connector 103. Information such as a position and a shape of heat absorber 104 provided in connector 103 is determined when the host device is manufactured, and thus a storage unit (not illustrated) such as a nonvolatile memory that is separately mounted on the host device stores the information when the host device is manufactured and holds the information that is available by SoC 106.

Although the host device usually requires a DRAM, other peripheral components, and the like, they are not illustrated because they are not directly related to the contents of the present disclosure.

Memory card 201 includes no heat dissipator for releasing heat in memory card 201.

Memory card 201 inserted into connector 103 mounted on substrate 105 of the host device receives a command using an electric signal from SoC 106 via connector 103. Memory card 201 is capable of analyzing the received electrical signal and transmitting a response using an appropriate electrical signal to SoC 106.

Fig. 2 includes a lower part illustrating a state in which memory card 201 is inserted into connector 103.

Connector 103 has a shape as in the first exemplary embodiment, and thus the shape will not be described.

### [2-2. Operation]

Operation of memory card 201 configured as described above will be described as follows. Fig. 5 is a sequence diagram for illustrating operation of the host device and memory card 201 inserted into connector 103 of substrate 105 of the host device. Memory card 201 is inserted into connector 103 of substrate 105 of the host device. Connector 103 is connected to SoC 106 mounted on the host device by signal line 107 to notify SoC 106 of information that memory card 201 has been inserted (S501).

SoC 106 detects insertion of memory card 201 (S502). SoC 106 mounted on the host device transmits a command to memory card 201 via signal line 107. Memory card 201 analyzes the command and returns an appropriate response. The command and response described above are repeated multiple times to execute initialization processing (S503). After the initialization processing, memory card 201 is brought into a state where writing, reading, erasing, and the like of data can be executed.

SoC 106 issues a command for requesting heat dissipator information to memory card 201 (S504). Memory card 201 returns a response including the heat dissipator information provided therein (S505). SoC 106 calculates heat dissipation performance from the heat dissipator information included in the response and the heat absorber information already provided and held in connector 103. For example, when it is found that no heat dissipator is provided, the heat dissipation performance is calculated to be low (S506).

When determining that the heat dissipation performance is at a low level, SoC 106 gives up high-speed writing and high-speed reading with large heat generation, and determines that low-speed writing and low-speed reading still can be continuously executed (S507). After that, SoC 106 executes the low-speed writing and the low-speed reading on memory card 201 as necessary (S508).

Information to be transmitted and received, and information to be used for calculation of heat dissipation performance, are similar to those in the first exemplary embodiment, and thus only a determination example will be described. An example will be described in which the material name illustrated in Fig. 10 is used as material information on the heat dissipator. In response to a command requesting the heat dissipator information from SoC 106, memory card 201 returns a response including whether the heat dissipator exists and position information indicated as "000", and the material name of the heat dissipator indicated as "100". This information allows SoC 106 to find a memory card that is provided with no heat dissipator and has a part to be in contact with the heat absorber of connector 103, the part being made of epoxy resin. SoC 106 has already known the information on the connector, and thus can determine that the heat dissipation performance is at a low level because memory card 201 is provided with no heat dissipator.

### [2-3. Effects, etc.]

As described above, SoC 106 of the host device in the second exemplary embodiment issues a command for requesting the heat dissipator information to memory card 201 inserted. Memory card 201 returns a response including the heat dissipator information to SoC 106.

As a result, SoC 106 of the host device can determine whether memory card 201 inserted has low heat dissipation performance. Thus, a writing speed and a reading speed of data suitable for the heat dissipation performance can be easily determined.

### (Third exemplary embodiment)

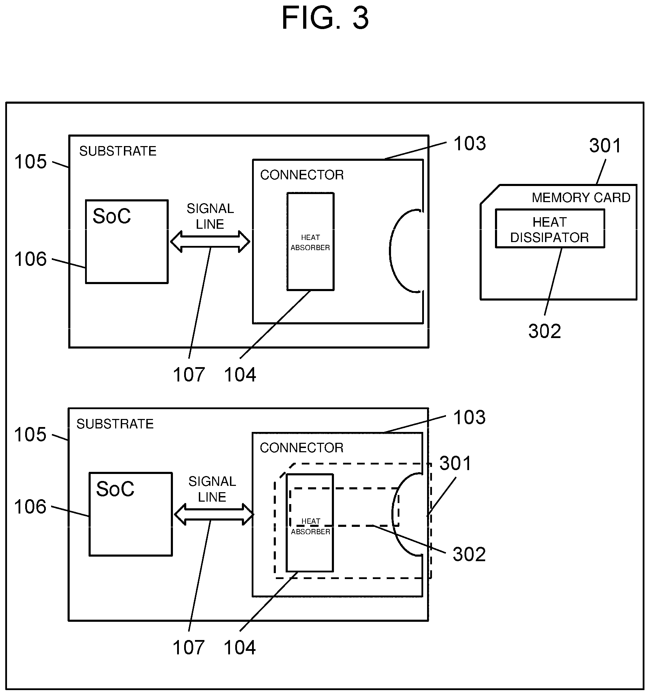

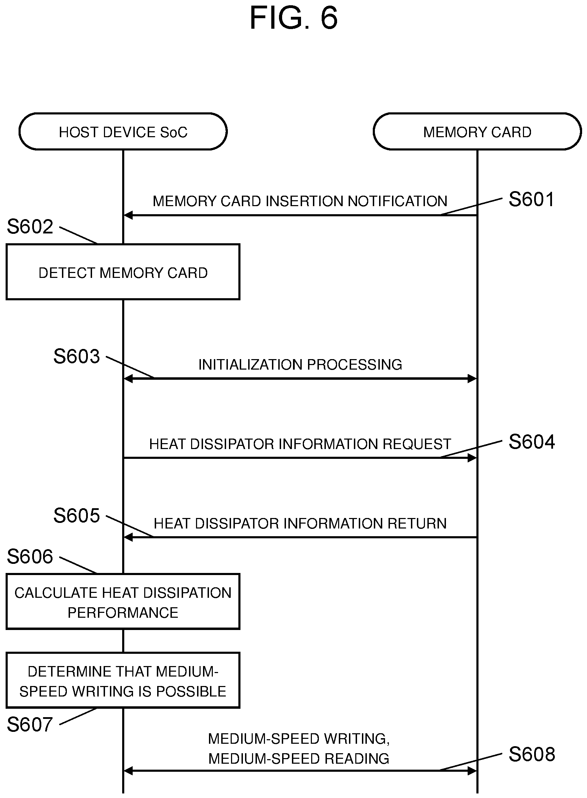

A third exemplary embodiment will be described below with reference to FIGS. 3 and 6.

### [3-1. Configuration]

Fig. 3 is a schematic diagram illustrating a memory card and a connector mounted on a substrate of a host device according to the third exemplary embodiment. With reference to an upper part of Fig. 3 in which the memory card is removed, a configuration will be described. Substrate 105 of the host device is equipped with connector 103 into which memory card 301 can be inserted and removed. Connector 103 includes heat absorber 104. Heat absorber 104 is made of a material having high thermal conductivity to efficiently conduct heat from memory card 301 to the connector. Heat absorber 104 is configured to be in contact with a memory card inserted. Substrate 105 is also equipped with a controller capable of transmitting and receiving an electric signal. SoC 106 is an example of the controller. SoC 106 is connected to connector 103 by signal line 107, and can transmit an electric signal from SoC 106 to connector 103. Information such as a position and a shape of heat absorber 104 provided in connector 103 is determined when the host device is manufactured, and thus a storage unit (not illustrated) such as a nonvolatile memory that is separately mounted on the host device stores the information when the host device is manufactured and holds the information that is available by SoC 106. Although the host device usually requires a DRAM, other peripheral components, and the like, they are not illustrated because they are not directly related to the contents of the present disclosure. Memory card 301 includes heat dissipator 302 for releasing heat in memory card 301. Heat dissipator 302 is made of a material having a higher thermal conductivity than a housing of memory card 301. Heat dissipator 302 is at a position partially in contact with heat absorber 104 when inserted into connector 103. Memory card 301 inserted into connector 103 mounted on substrate 105 of the host device receives a command using an electric signal from SoC 106 via connector 103. Memory card 301 is capable of analyzing the received electrical signal and transmitting a response using an appropriate electrical signal to SoC 106.

Fig. 3 includes a lower part illustrating a state in which memory card 301 is inserted into connector 103. Connector 103 has a shape as in the first exemplary embodiment, and thus the shape will not be described.

### [3-2. Operation]

Operation of memory card 301 configured as described above will be described as follows. Fig. 6 is a sequence diagram for illustrating operation of the host device and memory card 301 inserted into connector 103 of substrate 105 of the host device. Memory card 301 is inserted into connector 103 of substrate 105 of the host device. Connector 103 is connected to SoC 106 mounted on the host device by signal line 107 to notify SoC 106 of information that memory card 301 has been inserted (S601).

SoC 106 detects insertion of memory card 301 (S602). SoC 106 mounted on the host device transmits a command to memory card 301 via signal line 107. Memory card 301 analyzes the command and returns an appropriate response. The command and response described above are repeated multiple times to execute initialization processing (S603). After the initialization processing, memory card 301 is brought into a state where writing, reading, erasing, and the like of data can be executed.

SoC 106 issues a command for requesting heat dissipator information to memory card 301 (S604). Memory card 301 returns a response including the heat dissipator information provided therein (S605). SoC 106 calculates heat dissipation performance from the heat dissipator information included in the response and the heat absorber information already provided and held in connector 103. For example, when the heat dissipator is partially identical in position to the heat absorber and the heat dissipator and the heat absorber are each made of a material with a high thermal conductivity, the heat dissipation performance is calculated to be medium (S606).

When determining that the heat dissipation performance is at a high level, SoC 106 determines that medium-speed writing and medium-speed reading with medium heat generation can be executed (S607). After that, SoC 106 executes the medium-speed writing and the medium-speed reading on memory card 301 as necessary (S608).

Information to be transmitted and received, and information to be used for calculation of heat dissipation performance, are similar to those in the first exemplary embodiment, and thus only a determination example will be described.

An example will be described in which the material name illustrated in Fig. 10 is used as material information on the heat dissipator. In response to a command requesting the heat dissipator information from SoC 106, memory card 301 returns a response including whether the heat dissipator exists and position information indicated as "100", and the material name of the heat dissipator indicated as "010". This information allows SoC 106 to find memory card 701 that is provided with the heat dissipator at position A and made of copper. SoC 106 has already known the information on the connector, and thus finds that connector 801 with the heat absorber at position A allows the heat absorber to be partially identical in position to the heat dissipator and the heat dissipation performance is at a medium level. The heat dissipator is made of a material with a thermal conductivity of 200 W/mK or more and less than 300 W/mK, and thus finding that the thermal conductivity is also at a medium level. These pieces of information allow SoC 106 to determine that memory card 301 inserted into the connector has heat dissipation performance at a medium level

### [3-3. Effects, etc.]

As described above, SoC 106 of the host device in the third exemplary embodiment issues a command for requesting the heat dissipator information to memory card 301 inserted. Memory card 301 returns a response including the heat dissipator information to SoC 106.

As a result, SoC 106 of the host device can determine whether memory card 301 inserted has heat dissipation performance at a medium level. Thus, a writing speed and a reading speed of data suitable for the heat dissipation performance can be easily determined.

### (Other exemplary embodiments)

The first to third exemplary embodiments have been described as examples of the technique disclosed in the present application. However, the techniques of the present disclosure are not limited to the above exemplary embodiments, and may also be applied to exemplary embodiments in which change, substitution, addition, omission, and the like are made. Alternatively, a new exemplary embodiment can be made by combining each component described in the first to third exemplary embodiments described above.

Thus, other exemplary embodiments will be exemplified below.

The first to third exemplary embodiments have been described with the position and the material of the heat dissipator serving as information for calculating performance of the heat dissipator capability. The information for calculating performance of the heat dissipator may be any information that affects heat dissipation, and thus this information is not limited to the position and the material of the heat dissipator. Examples of the information may include a shape of the heat dissipator, such as vertical and horizontal lengths, a shape of the memory card itself, a surface area of the memory card itself, whether the memory card includes a fin, and an orientation of the fin if provided.

The first to third exemplary embodiments have been described with the connector in a shape allowing insertion of the memory card. The connector may be any connector that can be attached to and detached from a non-volatile memory, and thus is not limited to the shape allowing insertion of the memory card. For example, a connector such as M.2 is available.

The first to third exemplary embodiments are each configured such that the host device limits the writing speed to the memory card and the reading speed from the memory card based on the heat dissipation performance calculated. Operation performed by the host device based on the heat dissipation performance calculated may be operation for compensating for insufficient heat dissipation performance. Examples of the operation may include operation of opening a door of a housing of the host device to lower a temperature around the memory card, an operation of operating air cooling fan 111 mounted on the host device, and an operation of increasing a rotation speed of air cooling fan 111. That is, the host device controls air cooling fan 111 as the operation of compensating the heat dissipation performance of the memory card based on the heat dissipation performance calculated. Alternatively, a warning of insufficient heat dissipation performance may be notified to a host device user.

The exemplary embodiments described above are for exemplifying the technique in the present disclosure, so that various changes, replacements, additions, omissions, and the like can be made within the scope of claims or equivalents thereof.

### INDUSTRIAL APPLICABILITY

The present disclosure is applicable to a device that writes and reads data while generating heat at a high temperature. Specifically, the present disclosure is applicable to digital cameras, movies, smartphones, drones, and the like.

### REFERENCE MARKS IN THE DRAWINGS

101, 201, 301, 701, 702, 703, 704, 705: memory card
102, 302: heat dissipator
103, 801, 802, 803, 804, 805: connector
104: heat absorber
105: substrate
106: SoC
107: signal line
108: memory
109: processor
110: storage unit
111: air cooling fan
1101: signal terminal
1102: signal terminal

## Claims

1. A memory card configured to be inserted into and removed from a connector provided in a host device, the memory card comprising:
a memory that stores heat dissipator information on a heat dissipator of the memory card; and
a processor that returns a response including the heat dissipator information in response to a command for inquiring heat dissipation performance transmitted from the host device.

2. A memory card configured to be inserted into and removed from a connector provided in a host device, the memory card comprising:
a memory that stores heat dissipator information on a heat dissipator of the memory card; and
a processor that receives an initialization command transmitted from the host device, repeats returning a response to the host device to complete initialization processing, and then returns a response including the heat dissipator information in response to a command inquiring for heat dissipation performance transmitted from the host device.

3. The memory card according to Claim 1 or 2, wherein the heat dissipator information is information on whether the memory card includes the heat dissipator.

4. The memory card according to Claim 1 or 2, wherein the heat dissipator information is information on a position of the heat dissipator.

5. The memory card according to Claim 1 or 2, wherein the heat dissipator information is information on a shape of the heat dissipator.

6. The memory card according to Claim 1 or 2, wherein the heat dissipator information is information on a material of the heat dissipator.

7. The memory card according to Claim 1 or 2, wherein the heat dissipator information is a combination of information indicating whether the memory card has the heat dissipator, information on a position of the heat dissipator, information on a shape of the heat dissipator, and information on a material of the heat dissipator.

8. A host device comprising:
a connector that includes a heat absorber and allows insertion and removal of a memory card;
a storage unit that holds heat absorber information indicating a position, a shape, and a material of the heat absorber; and
a controller capable of using the heat absorber information, wherein
the controller issues a command inquiring heat dissipation performance of the memory card, receives a response including heat dissipator information from the memory card in response to the command, and calculates the heat dissipation performance from the heat absorber information and the heat dissipator information.

9. The host device according to Claim 8, wherein the controller limits a writing speed to the memory card and a reading speed from the memory card based on the heat dissipation performance.

10. The host device according to Claim 8 or 9, wherein the controller performs operation of compensating heat dissipation performance of the memory card based on the heat dissipation performance.

11. The host device according to Claim 10, further comprising a fan,
wherein the controller controls the fan as the operation of compensating heat dissipation performance of the memory card based on the heat dissipation performance.

12. The host device according to any one of Claims 8 to 11, wherein the heat absorber has a convex shape.
